# EUROPEAN PATENT APPLICATION

(11) **EP 3 815 981 A1**
(43) Date of publication of application: **05.05.2021**
(21) Application number: 20382919.7
(22) Date of filing: 21.10.2020
(51) Int. Cl.: B60R 13/10, B60R 19/44

(54) **VEHICLE LICENSE PLATE AND BUMPER PROTECTOR FRAME**

(30) Priority: 28.10.2019 ES 201900490 U
(71) Applicant: Yepes Mendoza, Iván, 28043 Madrid (ES)
(72) Inventor: Yepes Mendoza, Iván, 28043 Madrid (ES)
(74) Representative: Sahuquillo Huerta, Jesús

(57) **Abstract**

The present invention relates to a protective frame for a vehicle license plate comprising: (a) a body having a front face (4), a rear wall (6), an upper part (8), side edges (10, 12), and a lower edge (14); (b) a compartment formed by all the edges (the complete frame) for receiving a license plate; and (c) notches (20) in the inner side parts (10, 12), together with the rear (6) and inner parts of the frame, where the license plate will be seated, for easy grip and placement.

## Description

### Field of the Art

The present invention belongs to the field of protectors for vehicles, and more particularly to protectors for automobile license plates and bumpers. The object of the present invention is a new device for fixing a license plate to a vehicle. Specifically, it relates to a protective frame for vehicle license plate and front.

### Background of the Invention

Battered, cracked, bent, or scratched car license plates are a common occurrence as a result of the frequent impacts they sustain, particularly while performing parking maneuvers. The same thing occurs with bumpers. This is more pronounced in big cities where parking difficulties are greater and parking spaces are much smaller.

Normally, license plates tend to be secured to vehicles by means of two or four screws in the front of the car. The most common methods for placing the license plate involve placing it directly on the bumper using screws, or placing it in a plastic frame and screwing same onto the front bumper, or placing it in a frame which is in turn screwed to a plastic front structure of the bumper.

These aforementioned plastic materials serving as a frame or anchoring for the license plates cannot withstand impacts in a favorable manner and the license plates are scratched, bent, or cracked just like their plastic supports, given that they are often the part that protrudes most from the front of cars.

There are embodiments which have attempted to solve this problem but they present problems when being used. For example, patent US8850727 B2 describes a rubber front frame for the license plate, placed on said license plate and screwed onto the car from the frame itself, going through the license plate.

The main technical problem of the frame described in this document is that, when a strong pressure is exerted on the frame (such as when the back of a car hits the frame while parking), the license plate is in direct contact with the vehicle or with the plastic part onto which it is screwed, so it keeps damaging the front of the car. This is due to the fact that the license plate is not inserted into the frame itself, but the frame is simply superimposed on the license plate. Furthermore, with strong pressure, the screws that are in the front part of the frame could be pressed and it could cause the license plate to crack right at the area occupied by the screws.

Another identified prior art document is document US2015/0135567A1. This document again describes a rubber frame. This time the frame is a closed frame which, however, has the drawback that there is provided a groove in the upper part of the entire frame for inserting the license plate which will be screwed again from the front of the frame with four screws. In addition to the problems verified and mentioned above relative to the arrangement of the screws in the front part of the frame which cause the plate to break at the area of the screws, having a groove communicating the outside of the frame with the inside for inserting the license plate causes the frame assembly to lose its strength properties when a great pressure is exerted, such as the pressure from driving a vehicle towards the front of the license plate frame. In said situation, the place where the frame would deform is already anticipated. Having an insertion groove either in the longest part (upper or lower side) or the shortest part (left or right side) causes the license plate to lose all the strength and covering characteristics on all sides, so it is an unwise technical solution.

### Summary of the Invention

A new and improved license plate frame device is developed with this new invention, offering protection to both the plate and the front bumper of the vehicle, actively overcoming the aforementioned difficulties and prolonging the service life of the license plate and preventing typical small impacts or scratches while parking.

As a novelty in the state of the art, the frame for the license plate of the proposed invention does not contain any type of groove through which the license plate must be introduced and which would reduce the strength of the frame assembly when it withstands the pressure against another vehicle, as described above. Furthermore, the present invention is not a frame superimposed on the license plate either as this would cause the license plate of the present invention to be in contact with the front of the vehicle with the possibility of damaging the bumper or the plastic support often found in vehicles.

The proposed invention is a protective frame for vehicle license plate and front bumper that is made of a resistant and flexible rubber material which can compress in a high degree of pressure and return to its original state, and can be left outside at extreme temperatures, with significant strength and hardness, wherein the license plate will be introduced directly through the front of the protector with a slight bending of the ends to enable placing the license plate inside the frame. The license plate will therefore be held completely in the rear part of the frame, given that there will be a small notch in the side and inner parts of the rear wall that will keep the license plate perfectly placed and secured before it is adhered and/or screwed to the back. These screws would be arranged directly in the license plate just like they were before placing the protector, but not at the edges of the frame, so another vehicle will not be able to have any access for impacting thereon.

The body of the protective frame for the license plate has a front face, a rear wall, an upper edge, side edges, and a lower edge. The body forms a rectangular housing for placing the license plate.

Moreover, the present invention may include in the protective frame for the license plate an outer upper edge, outer side edges, and/or rounded corners therebetween. Similarly, the side parts can be somewhat thicker than the upper and lower parts of the frame, the thickness of which could gradually increase from the central part to the ends thereof.

The preceding summary of the invention is not intended to limit the scope of the disclosure contained herein or to limit the scope of the attached claims. In contrast, as will be appreciated by those skilled in the art, many of the specifications of the embodiments described above can be implemented without having to be independent of or different from the claimed invention.

The device of the present invention will be better understood in reference to the specific embodiments and the attached figures which illustrate and exemplify such embodiments.

### Brief Description of the Drawings

To complement the description that is being made and for the purpose of helping to better understand the features of the invention, a set of drawings is attached as an integral part of said description in which the following is depicted in a nonlimiting illustrative character:
Figure 1 shows a front view of the embodiment of the protective frame for the vehicle license plate.
Figure 2 shows a bottom view of the embodiment of Figure 1.
Figure 3 shows a side view of the embodiment of Figure 1.
Figure 4 shows a top view of the embodiment of Figure 1.
Figure 5 shows a rear view of the embodiment of Figure 1.
Figure 6 shows a detail of the notches made between the inner ends of the side parts together with the back part of the embodiment of Figure 1.

### Preferred Embodiment of the Invention

The preferred embodiments will be explained below in reference to the figures that are shown. The drawings of the invention are illustrative and do not seek to limit the invention, as will be shown in the section corresponding to the claims.

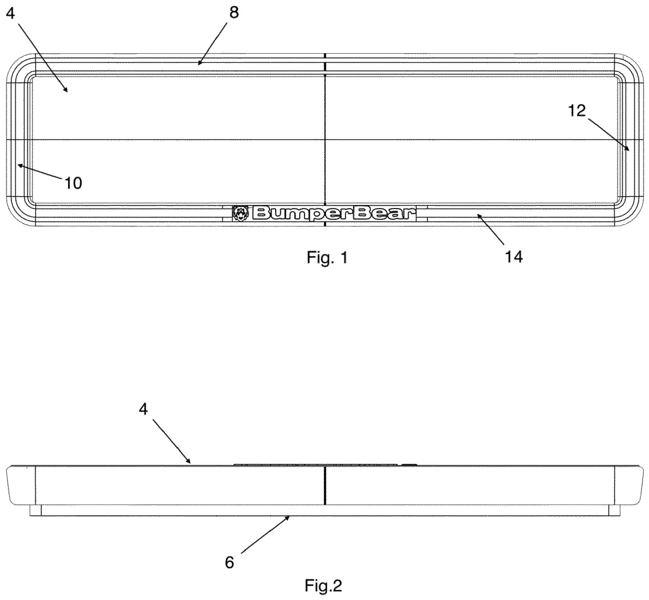

Figure 1 shows the front view of an embodiment of the protective frame for a vehicle license plate. The frame or body has a front face (4) protruding several centimeters over the rear wall (6). This front face has an upper edge (8), side edges (10) and (12), and a lower edge (14) which do not have to have the exact same thickness.

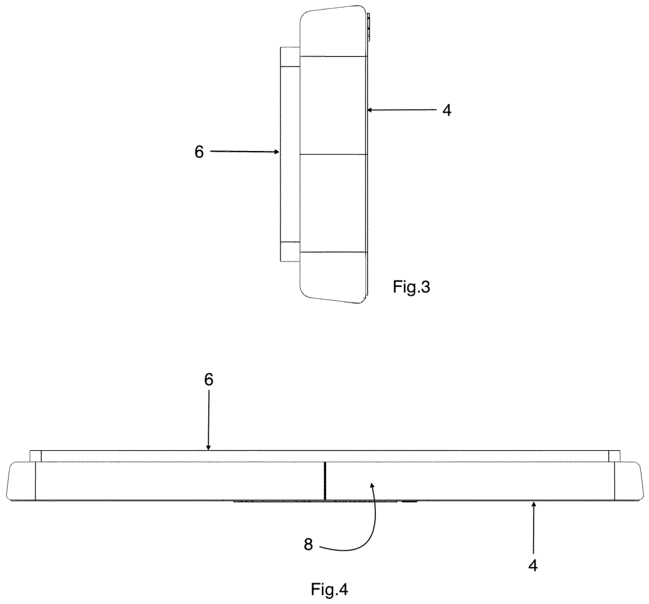

Figure 2 shows, more particularly, the lower edge (14) of the protective frame shown in Figure 1. The back part of the rear part (6) which will be the one that will be in contact with the front of the vehicle and is well fitted through screws can also be seen. Figure 3 shows the side view of the protective frame shown in Figure 1. As shown in the different figures, the license plate will always be separated from the bumper, in this case by the back part of the rear wall (6), and it will always be free from possible damages by other vehicles as a result of the projecting edges of the front face (4). Therefore, the license plate will always be protected inside the protective frame.

Furthermore, as shown in Figure 3, the protective front (4) will be wider than the rear wall (6), which will help in adjusting the placement of the license plate. By having the front face (4) that is wider than the rear wall (6), the surface area increases and maximum protection is thereby achieved.

Figure 4 shows the part of the upper edge of the protective frame (8). Figure 4 also shows the front face (4) that is wider than the rear wall (6).

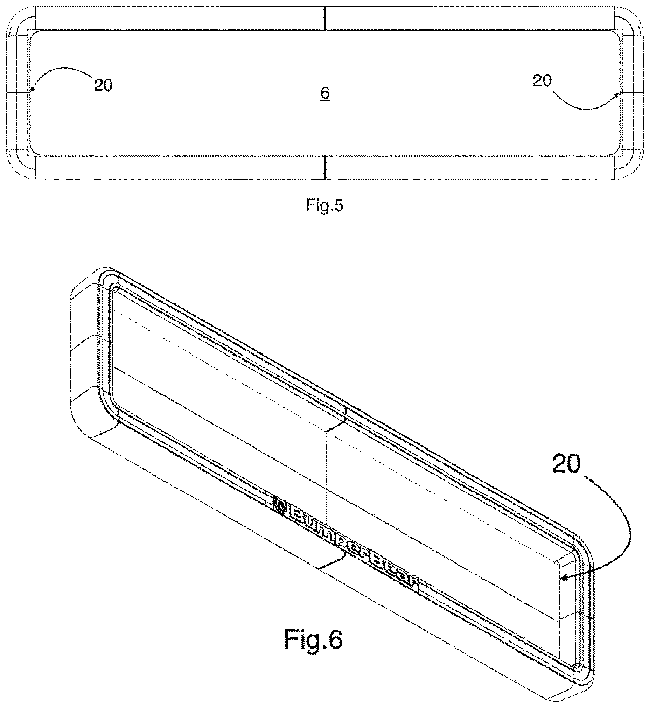

Figure 5 shows the rear wall (6) of the protective frame that will be screwed through the two or four holes through the license plate onto the front of the vehicle. The holes will be made while placing the protective frame, being aligned with the mounting openings arranged in the license plates.

Figure 6 shows a detail of the notches (20) measuring several millimeters made in both walls of the side edges adjacent to the rear wall (6) where the license plate will be placed. The license plate will therefore be completely seated on the rear part and perfectly placed for being screwed to the front of the vehicle. The thickness of the side, upper, and lower edges will prevent any vehicle from approaching the license plate and impacting thereon.

## Claims

1. A protective frame for a vehicle license plate, comprising:
a body having a front face, a rear wall, an upper part, side edges, and a lower edge;
a compartment demarcated by the rear part, the upper part, the side edges, and the lower edge which is configured for receiving a license plate; and
notches in the inner side parts, together with the rear and inner parts of the frame, where the license plate will be seated for easy grip and placement.

2. The protective frame for a vehicle license plate according to claim 1, wherein the frame has rounded side edges.

3. The protective frame for a vehicle license plate according to claim 2, wherein the front face is wider than the rear wall.

4. The protective frame for a vehicle license plate according to claim 3, wherein the frame contains the walls with a maximum inclination of up to 15° to favor the visibility of the license plate.

5. The protective frame for a vehicle license plate according to claim 4, wherein the side edges have a thickness greater than the upper and lower edges.

6. The protective frame for a vehicle license plate according to claim 5, wherein the thickness and/or width of the upper and lower edges gradually increase as they join the side edges.
